(19) Europäisches Patentamt
European Patent Office
Office européen des brevets

(11) **EP 2 425 589 B1**

(12) **FASCICULE DE BREVET EUROPEEN**

(45) Date de publication et mention
de la délivrance du brevet:
**10.06.2015 Bulletin 2015/24**

(21) Numéro de dépôt: **10727026.6**

(22) Date de dépôt: **23.04.2010**

(51) Int Cl.:
***H04L 12/403*** *(2006.01)*

(86) Numéro de dépôt international:
**PCT/FR2010/050777**

(87) Numéro de publication internationale:
**WO 2010/125284 (04.11.2010 Gazette 2010/44)**

(54) **PROCÉDÉ POUR ÉMETTRE DES MESSAGES PÉRIODIQUES**

VERFAHREN ZUM SENDEN VON PERIODISCHEN NACHRICHTEN

METHOD FOR TRANSMITTING PERIODIC MESSAGES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.04.2009 FR 0952861**

(43) Date de publication de la demande:
**07.03.2012 Bulletin 2012/10**

(73) Titulaire: **Peugeot Citroën Automobiles SA**
**78140 Vélizy-Villacoublay (FR)**

(72) Inventeur: **SOLLIER, Vincent**
**F-92120 Montrouge (FR)**

(74) Mandataire: **Fernandez, Francis Lionel et al PSA Peugeot Citroën Automobiles SA.**
**Propriété Industrielle (LG081)**
**18, Rue des Fauvelles**
**92250 La Garenne-Colombes (FR)**

(56) Documents cités:
**US-A- 4 855 996**

- **DOUSKALIS W: "A NUMBER THEORETIC APPROACH TO TIME DIVISION MULTIPLEXING" IEEE TRANSACTIONS ON COMMUNICATIONS, IEEE SERVICE CENTER, PISCATAWAY, NJ, US, vol. 38, no. 9, 1 septembre 1990 (1990-09-01), pages 1504-1510, XP000173219 ISSN: 0090-6778**
- **KOPETZ H ET AL: "TTP - A time-triggered protocol for fault-tolerant real-time systems" FAULT-TOLERANT COMPUTING, 1993. FTCS-23. DIGEST OF PAPERS., THE TWENTY 19930622; 19930622 - 19930624 LOS ALAMITOS, CA, USA, IEEE COMPUT. SOC, 22 juin 1993 (1993-06-22), pages 524-533, XP010251368 ISBN: 978-0-8186-3680-6**

**Description**

L'invention concerne un procédé pour émettre des messages périodiques sur un réseau, particulièrement sur un réseau exploitant un bus de communication série, employé pour faire communiquer différents calculateurs qui contrôlent et commandent les organes d'un véhicule, notamment d'un véhicule automobile.

Le procédé utilise des fenêtres temporelles de longueur constante qui permettent à un calculateur relié au réseau d'émettre des messages périodiques et non périodiques en répartissant les messages à émettre dans les fenêtres.

On connaît déjà des procédés de ce type tels que, par exemple, celui décrit dans le document EP1461910B1. Dans ce document de l'état de la technique, les fenêtres sont distribuées entre les calculateurs de façon à attribuer spécifiquement certaines fenêtres à un calculateur. Cette approche pose des problèmes lorsque la charge d'un calculateur augmente en émission ou lorsqu'il est nécessaire de modifier le nombre de calculateurs.

La possibilité laissée à chaque calculateur de gérer de manière autonome les fenêtres temporelles, permet une plus grande souplesse.

Cependant d'autres problèmes apparaissent alors, notamment le problème de la collision entre des messages qui sont émis indépendamment par différents calculateurs.

Le document US4,855,966 divulgue un bus de données multiplexé interconnectant entre eux plusieurs dispositifs communicants. Le document divulgue aussi un procédé permettant d'allouer des intervalles de temps à chacun des dispositifs communicants.

Le document « D Douskalis, W, A number theoretic approach to time division multiplexing, IEEE Transactions on Communications, IEEE SERVICE CENTER PISCATAWAY, NJ, US, V. 38 , no. 9, 1 Sep 1990, pages 1504 - 1510, ISSN : 0090-6778 » présente une méthode de multiplexage temporel synchrone.

Pour répondre aux problèmes que pose l'état antérieur de la technique, l'invention a pour objet un procédé pour émettre depuis un calculateur, des messages à chacun desquels est associé une période d'émission, en répartissant les messages dans des fenêtres temporelles à périodicité prédéterminée de telle sorte que chaque période d'émission est exprimable par un multiple entier de ladite périodicité. Dans le procédé, les messages sont placés dans des fenêtres qui sont sélectionnées avec des décalages par rapport à une fenêtre initiale de façon à éviter ou à diminuer des collisions avec des messages émis par un autre calculateur ou avec des messages présents sur le réseau.

Ce procédé permet aussi de diminuer les collisions avec les autres messages présents sur le réseau.

Particulièrement, pour sélectionner chaque fenêtre, le procédé comprend :

- une première étape à partir de laquelle pour un message courant sélectionné parmi lesdits messages, on teste des fenêtres temporelles successives en nombre inférieur d'une unité au multiple entier qui exprime la période d'émission associée au message courant, en calculant pour chaque fenêtre testée au moins la quantité de bits qui est contenue dans la fenêtre testée et dans une fenêtre qui succède à la fenêtre testée après une période d'émission lorsque le message courant est placé dans ladite fenêtre testée ; et
- une deuxième étape dans laquelle la fenêtre sélectionnée pour placer le message, est celle pour laquelle au moins la quantité de bits calculée est minimale.

Plus particulièrement :

- dans la première étape, on calcule pour chaque fenêtre testée, une priorité moyenne des messages contenus dans la fenêtre testée et dans la fenêtre qui succède à la fenêtre testée après une période d'émission lorsque le message courant est placé dans ladite fenêtre testée ; et
- dans la deuxième étape, parmi deux fenêtres testées pour lesquelles la quantité de bits calculée est minimale, la fenêtre sélectionnée est celle pour laquelle la priorité moyenne est la plus faible.

Plus particulièrement encore dans la deuxième étape, parmi deux fenêtres testées pour lesquelles la quantité de bits calculée est minimale et la priorité moyenne est de niveau identique, la fenêtre sélectionnée est celle précédemment testée.

Avantageusement, le procédé comprend une étape initiale exécutée préalablement aux autres étapes et dans laquelle les messages à émettre sont classés par ordre de périodes d'émission croissantes et les messages auxquels sont associés des périodes d'émission identiques, sont classés par ordre de priorités décroissantes.

De préférence, le message courant sélectionné pour une première exécution de la première étape, est le message auquel la période d'émission associée est la plus faible et parmi les messages de période d'émission la plus faible, le message de priorité la plus élevée.

Plus précisément pour exécuter la première étape et la deuxième étape, les messages à émettre sont sélectionnés par ordre de périodes d'émission croissantes et pour des périodes d'émission identiques, par ordre de priorités décroissantes.

Particulièrement, le procédé comprend une troisième étape qui est exécutée après avoir sélectionné la fenêtre temporelle qui convient pour le message courant, de façon à trouver une position de fenêtre temporelle qui débute une suite de longueur maximale de fenêtres temporelles vides successives.

Plus particulièrement, après exécution de la troisième étape, la fenêtre testée est positionnée au milieu de ladite suite et la longueur de ladite suite est réduite de moitié.

Parmi d'autres caractéristiques intéressantes pour mettre en oeuvre l'invention, on remarque :

- une quatrième étape dans laquelle on observe s'il existe encore un message à traiter ;
- une cinquième étape exécutée s'il existe encore un message à traiter, en prenant le message observé comme nouveau message courant, de façon à ré exécuter la première étape pour le nouveau message courant lorsque la quantité de bits qui est contenue dans la fenêtre testée et dans la fenêtre qui succède à la fenêtre testée après une période d'émission, est nulle ou lorsque la valeur ordinale de la fenêtre testée est égale à la position de fenêtre temporelle qui débute une suite de longueur maximale de fenêtres temporelles vides successives ;
- une sixième étape exécutée après la cinquième étape lorsque la quantité de bits qui est contenue dans la fenêtre testée et dans la fenêtre qui succède à la fenêtre testée après une période d'émission, n'est pas nulle et lorsque la valeur ordinale de la fenêtre testée n'est pas égale à la position de fenêtre temporelle qui débute une suite de longueur maximale de fenêtres temporelles vides successives, de façon à ré exécuter la cinquième étape après avoir positionné la fenêtre testée au milieu de la suite réduite de longueur maximale de fenêtres temporelles vides successives et avoir réduit à nouveau de moitié ladite suite réduite.

Dans une version préférée de mise en oeuvre du procédé, la valeur ordinale de la fenêtre testée est remise à zéro lorsque ladite valeur ordinale atteint ledit nombre inférieur d'une unité au multiple entier qui exprime la période d'émission associée au message courant.

L'invention a aussi pour objet un produit programme d'ordinateur chargeable directement dans la mémoire interne d'un calculateur numérique, comprenant des portions de code logiciel pour l'exécution des étapes du procédé selon l'invention lorsque ledit programme est exécuté sur un calculateur.

Il est possible d'embarquer le procédé dans un calculateur. On peut aussi utiliser uniquement la synthèse des résultats c'est-à-dire utiliser les offsets ou les déphasages fournis par le procédé. Les résultats sont générés par une station de travail de type PC et paramétrés dans un calculateur.

L'invention a encore pour objet un calculateur agencé pour émettre des messages à chacun desquels est associée une période d'émission, comprenant en mémoire :

- une première variable pour indiquer une périodicité de fenêtres temporelles prédéterminée de telle sorte que chaque période d'émission est exprimable par un multiple entier de ladite périodicité ;
- une table associative dans laquelle les messages sont associés chacun à un décalage de fenêtre par rapport à une fenêtre initiale de décalage nul de façon à éviter ou à diminuer des collisions avec des messages émis par un autre calculateur ou avec des messages présents sur le réseau.

Particulièrement, les décalages associés aux messages conduisent à une répartition des messages dans les fenêtres temporelles qui génère une charge minimale d'occupation des fenêtres par les messages.

Avantageusement, les messages sont classés dans la table associative par ordre de périodes d'émission croissantes et les messages auxquels est associée une même période d'émission, sont classés par ordre de priorités décroissantes.

D'autres caractéristiques et avantages de l'invention ressortiront clairement de la description qui en est faite ci-dessous, à titre indicatif et nullement limitatif, en référence aux figures annexées, parmi lesquelles :

- la figure 1 montre un exemple de tableau qui répertorie les messages à émettre par un calculateur ;
- la figure 2 montre un autre exemple de tableau qui répertorie les messages à émettre par un calculateur ;
- la figure 3 montre un séquencement temporel d'émission de messages ;
- la figure 4 montre une étape de procédé conforme à l'invention en phase d'initialisation ;
- les figures 5 et 6 montrent comment le tableau de la figure 2 est traité en phase d'initialisation ;
- les figures 7 à 9 montrent des étapes de procédé conforme à l'invention après la phase d'initialisation ;
- Les figures 10 et 11 présentent les tableaux respectivement des figures 1 et 2 après traitement par le procédé décrit ;
- les figures 12 et 13 présentent des tableaux qui mesurent l'efficacité de la répartition des messages en émission.

Dans la présente description, on nomme tick une fenêtre temporelle de longueur constante qui se répète dans le temps avec une périodicité égale à sa longueur pour permettre à un calculateur d'émettre un ou plusieurs messages. Chaque calculateur sur le réseau gère son propre tick en émission, et ceci de façon totalement asynchrone avec la gestion par les autres calculateurs de leurs propres ticks.

Chaque calculateur comprend dans sa mémoire (non représentée) une table associative qui répertorie les messages à émettre cycliquement avec une période fixée, exprimée par exemple en millisecondes au moyen d'une variable V9 associée à chaque message.

A titre illustratif, on considère des messages formatés pour être émis sur un réseau de type CAN (Controller Area Network) particulièrement utilisé pour faire communiquer les différents organes d'un véhicule, notamment d'un véhicule automobile.

Un message pour ce type de réseau, comprend de manière connue, un champ identificateur qui permet de distinguer un message d'un autre. La valeur de l'identificateur donne la priorité du message sur le réseau. Plus sa valeur est faible, plus sa priorité est élevée. Chaque calculateur émet ses messages par ordre de priorité décroissante. En cas de conflit résultant d'une émission simultanée par plusieurs calculateurs, une phase d'arbitrage donne la main au calculateur qui émet un message avec la priorité la plus élevée, c'est-à-dire avec un identificateur de valeur la plus faible. Le message avec une priorité moins élevée est retardé par rapport à sa demande d'émission de façon à être émis à la suite du message de priorité plus élevée.

Chaque message comprend un champ de données utiles qui sert à transmettre des informations. Ce champ est constitué de zéro à huit octets.

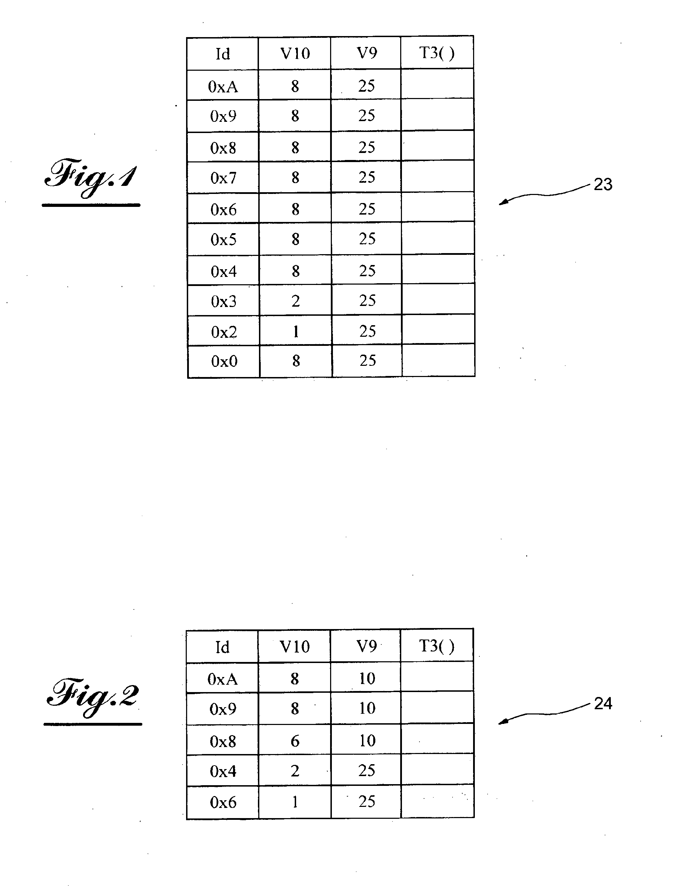

La figure 1 montre un exemple de telle table associative où tous les messages sont à émettre avec une même période de 25 ms. Chaque ligne de la table 23 est attribuée à un message avec un numéro d'ordre qui, conformément à un usage fréquent en automatisme, débute à zéro.

La première colonne de la table 23 comprend les identificateurs des messages codés par exemple en hexadécimal. L'identificateur de valeur 0xA sur la première ligne indique par exemple un message de priorité moins élevée que le message auquel est attribuée la deuxième ligne et qui comprend un identificateur de valeur 0x9.

La deuxième colonne de la table 23 comprend la longueur du champ de données utiles de chaque message associée à son identificateur. Dans l'exemple de mise en oeuvre décrit, la longueur est exprimée en octets au moyen d'une variable V10. On rappelle qu'un octet correspond à huit bits. On observe par exemple dans la table 23 que les variables V10 associées aux identificateurs 0x4 et 0x0 valent 8. Ces identificateurs désignent des messages comprenant des champs de données utiles de huit octets. La variable V10 associée à l'identificateur 0x3 vaut 2 et la variable V10 associée à l'identificateur 0x2 vaut 1. Ces identificateurs désignent respectivement un message comprenant un champ de données utiles de deux octets et un message comprenant un champ de données utiles de un octet.

Chaque case de la troisième colonne de la table 23 contient une valeur de la variable V9 qui est associée à l'identificateur de la première colonne sur la même ligne pour indiquer la période à laquelle le message identifié doit être émis. Ici, les dix messages répertoriés doivent être émis avec une période de 25 ms.

La figure 2 montre un exemple de table associative où les messages sont à émettre avec des périodes différentes. Comme pour la table 23, chaque ligne de la table 24 est attribuée à un message contenant son identificateur en première colonne, sa longueur en deuxième colonne et sa période en troisième colonne.

On observe que les messages identifiés 0xA, 0x9 et 0x8 ont une période de 10 ms et que les messages identifiés 0x4 et 0x6 ont une période de 25 ms, indiquées par la variable V10.

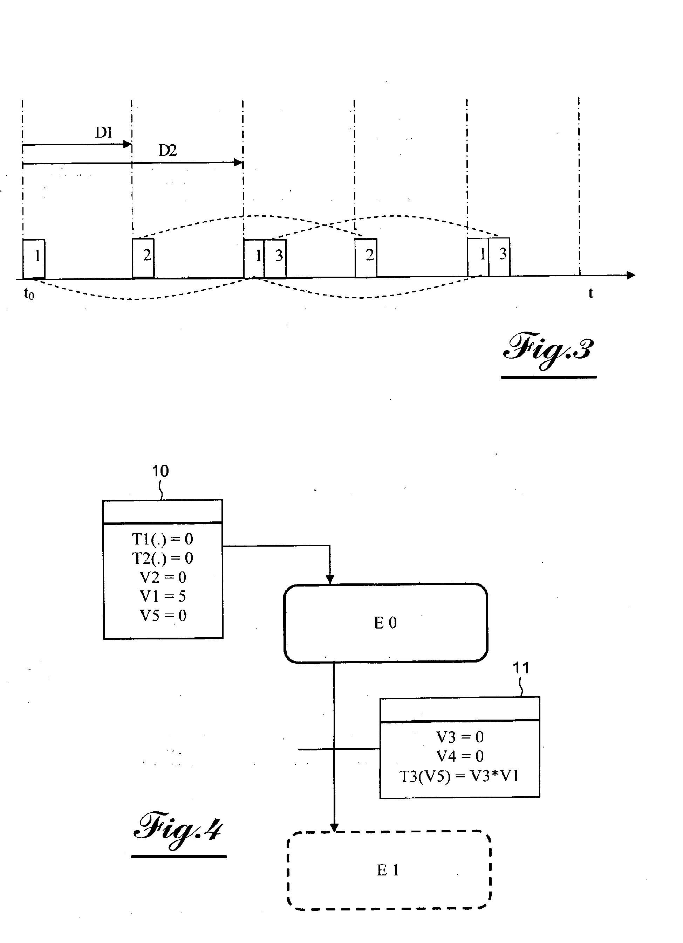

La figure 3 permet d'expliquer comment un calculateur gère ses ticks, ou plus généralement ses fenêtres temporelles dans le cadre de l'invention. L'axe horizontal représente le temps t. Chaque trait mixte vertical représente le début d'un tick. L'intervalle entre deux traits verticaux représente à la fois la longueur temporelle et la périodicité de renouvellement des ticks. On comprend que si les ticks sont grandement occupés par des émissions de messages, le risque de conflit avec des messages d'un autre calculateur est élevé. Le calculateur cherche à émettre les messages qu'il a à émettre à un moment considéré, en début de tick de façon à pouvoir espérer avoir émis les messages avant la fin du tick en cas d'arbitrage à cause d'émission simultanée de messages d'autres calculateurs.

A partir d'un instant $t_0$ défini par le premier trait vertical, le calculateur émet un message 1. Dans le cas illustré par la figure 3, la période d'émission du message 1 est égale au double de la périodicité des ticks. Le message 1 est réémis à partir du troisième trait vertical puis du cinquième trait vertical et ainsi de suite. Le calculateur émet un message 2 avec un décalage D1 par rapport à $t_0$. Le décalage D1, exprimé en nombre de ticks, est ici de un tick. Le message 2 est émis à partir du deuxième trait vertical. Dans le cas illustré par la figure 3, la période d'émission du message 2 est égale au double de la périodicité des ticks. Le message 2 est réémis à partir du quatrième trait vertical et ainsi de suite. Le calculateur émet un message 3 avec un décalage D2 par rapport à $t_0$. Le décalage D2, exprimé en nombre de ticks, est ici de deux ticks. Le message 3 est émis à partir du troisième trait vertical, à la suite du message 1 qui est plus prioritaire. Dans le cas illustré par la figure 3, la période d'émission du message 3 est égale au double de la périodicité des ticks. Le message 3 est réémis à partir du cinquième trait vertical et ainsi de suite.

Si les trois messages avaient été émis dans le même tick, leur temps d'émission aurait favorisé le risque de collision avec des émissions d'autres calculateurs. De plus, une phase d'arbitrage en cas de collision, aurait affecté les trois messages. On remarque sur la figure 3 que l'on peut respecter la période d'émission des message en les émettant dans des ticks différents. L'intérêt est que la faible occupation de chaque tick réduit le risque de collision et que, en cas de collision, la totalité des messages n'est pas affectée.

La périodicité des ticks doit être un diviseur entier de chaque période de message de façon à respecter la période de chaque message en nombre de ticks. Par exemple une périodicité de ticks de 5 ms convient lorsque les messages ont des périodes de 10 ms et de 25 ms.

Nous avons considéré seulement trois messages sur la figure 3 pour simplifier le propos. La quantité de messages à émettre par un calculateur, est généralement bien supérieure. Il devient rapidement complexe de déterminer comment répartir les émissions de messages dans les ticks, notamment pour éviter les bourrages.

Les étapes de procédé qui sont à présent décrites, permettent d'optimiser les décalages pour les messages émis périodiquement par un calculateur.

Un tableau d'entiers T3(), nommé par exemple OffsetMsg() dans un programme d'ordinateur, est prévu pour contenir un décalage calculé pour chaque message répertorié.

Dans une phase d'initialisation, un point d'activation 10 d'une étape E0, est activé par exemple par un démarrage du procédé. Le point d'entrée 10 est représenté par un empilement de deux blocs. Le bloc supérieur constitue une partie prémisse ou conditionnelle pour exécuter des actions qui sont contenue dans le bloc inférieur. Ici la partie conditionnelle est vide et la partie action est décrite à présent.

Un tableau d'entiers T1(), nommé par exemple tabSommeNbBitMsgSurRéseau() dans un programme d'ordinateur, dans lequel chaque case est associée à un tick pour contenir un nombre de bits occupés par les message dans le tick, est initialisé à zéro. De même, un tableau d'entiers T2(), nommé par exemple tabSommeId() dans un programme d'ordinateur, dans lequel chaque case est associée à un tick pour contenir une somme des identificateurs des messages présents dans le tick, est initialisé à zéro.

Une variable entière V1, nommée par exemple ValeurDuTick dans un programme d'ordinateur, est paramétrée avec la valeur de la périodicité des ticks qui est prédéterminée en fonction des périodes d'émission des messages. La périodicité des ticks peut être égale au plus grand commun diviseur des périodes des messages mais pas nécessairement. La périodicité des ticks peut être égale à tout commun diviseur des périodes d'émission de messages. Le plus grand commun diviseur a pour avantage de laisser un maximum de silence d'émission à la suite des messages regroupés pour être émis en début de ticks. Un plus petit diviseur a pour avantage de mieux pouvoir espacer l'émission des messages pour les immuniser contre les collisions. A titre illustratif, une valeur de 5 ms pour la variable V1 est bien adaptée à l'exemple de la figure 2.

Une variable entière V2, nommée par exemple CptBoucle dans un programme d'ordinateur, pour compter des itérations de traitement par le procédé, et une variable entière V5 nommée par exemple Msg dans un programme d'ordinateur, pour compter le nombre de messages traités par le procédé, sont initialisées à zéro.

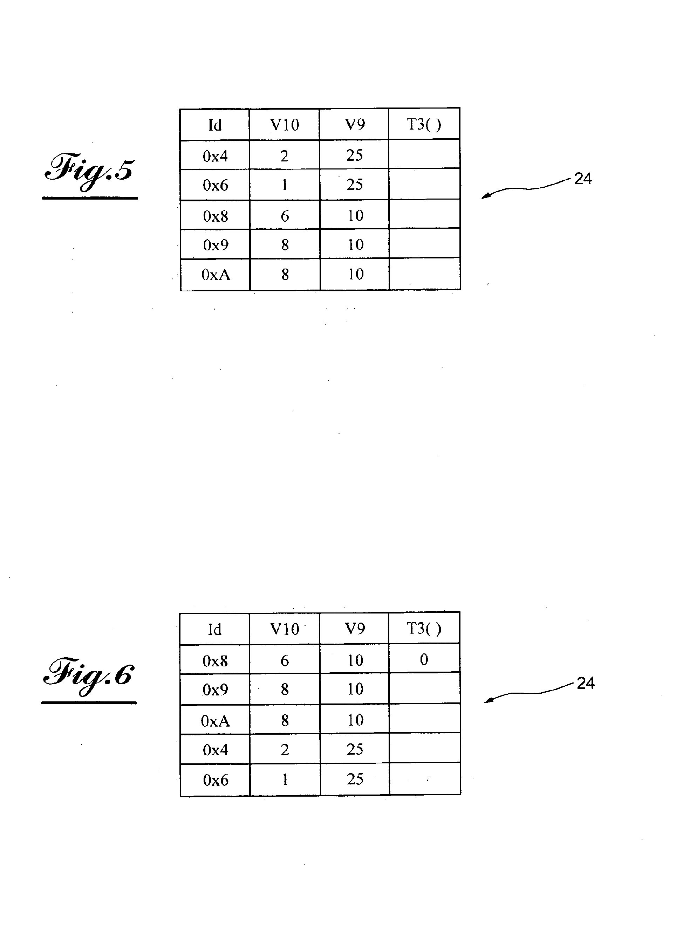

A l'activation, l'étape E0 commence par classer la table 23, 24 par ordre croissant des identificateurs. Ainsi comme on le voit sur la figure 5 qui présente le classement de la table 24, l'identificateur de plus petite valeur 0x4 est sur la première ligne et l'identificateur de plus grande valeur 0xA est sur la dernière ligne de la table. Un balayage de la table représenté en figure 5, à partir de la ligne zéro, traite les messages par ordre de priorité décroissante.

L'étape E0 reclasse ensuite la table 23, 24 par ordre croissant des périodes. Ainsi comme on le voit sur la figure 6 qui présente le reclassement de la table 24, les périodes de plus petite valeur V9 = 10, sont sur les premières lignes et les périodes de plus grande valeur V9 = 25, sont sur les dernières lignes de la table 24. Un balayage de la table représentée en figure 6, à partir de la ligne zéro, traite les messages par ordre de période croissante et pour des valeurs de période identiques, par ordre de priorité décroissante.

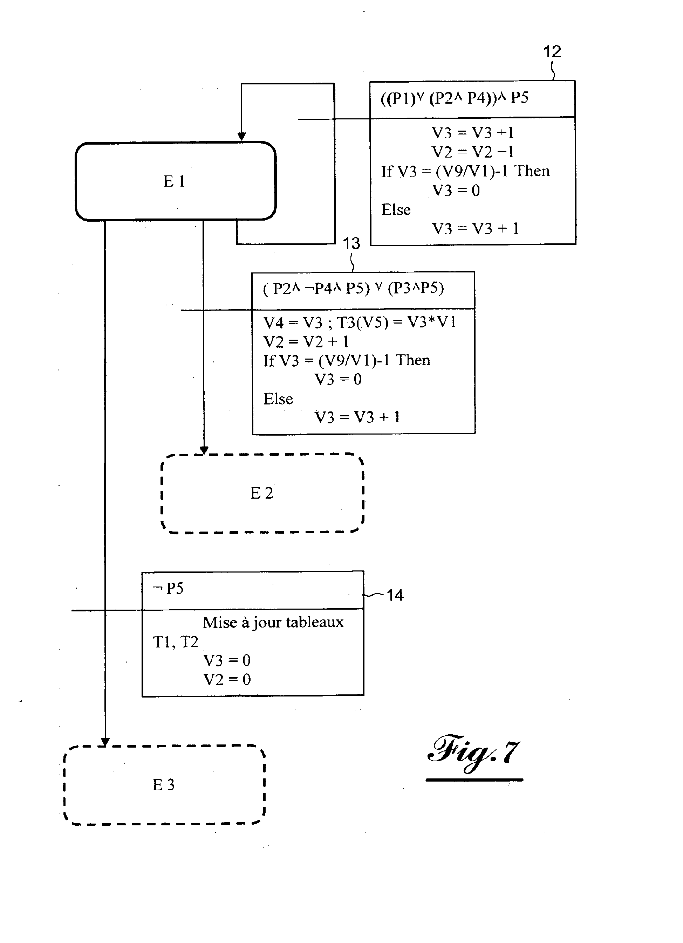

Une transition 11 active à partir de l'étape E0, une étape E1 décrite plus loin en référence à la figure 7. Dans l'ensemble des figures, chaque transition est représentée par un empilement de deux blocs. Le bloc supérieur constitue une partie prémisse ou conditionnelle pour exécuter des actions qui sont contenue dans le bloc inférieur. La partie conditionnelle de la transition 11 est vide dans la mesure où la transition 11 fait simplement suite aux classements, dans l'étape E0, de la table qui répertorie les messages. La partie action est décrite à présent.

Une variable V3, nommée par exemple Pos dans un programme d'ordinateur, pour indiquer une valeur ordinale de tick testée en vue de placer un message, et une variable entière V4, nommée par exemple PosPrec dans un programme d'ordinateur, pour mémoriser une valeur ordinale de tick sélectionnée précédemment en vue de placer le message, sont positionnées à zéro.

La variable V5 a été initialisée à zéro conformément au fait qu'à ce stade préliminaire du traitement, encore aucun message n'a été traité. La valeur de la première ligne du tableau T3(V5), pointée par V5 = 0, est positionnée à la valeur du produit des variables V3 et V1 dont la valeur nulle signifie que le premier tick testé est celui d'ordre zéro qui correspond à un décalage nul.

En référence à la figure 7, une étape E1 consiste à sélectionner un tick pour placer un message courant. Lorsque l'étape E1 est activée pour la première fois à la suite de l'étape E0 par la transition 11, le tick sélectionné donne la valeur de la première ligne de tableau T3(V5). Le premier message courant qui est considéré, est donc celui répertorié sur la première ligne du tableau 23.

Une transition 12 est conditionnée par la formule propositionnelle suivante :

$$((P1) \vee (P2 \wedge P4)) \wedge P5$$

De manière connue dans les formules propositionnelles, le signe $\vee$ désigne une conjonction logique et le signe $\wedge$ désigne une disjonction logique.

La proposition P1 est définie pour avoir les mêmes valeurs de vérité que :

$$T1(V3)+T1(V3+V9) > T1(V4)+T1(V4+V9)$$

Dans l'expression de la proposition P1, le membre de gauche représente la quantité totale de bits des messages qui occupent le tick testé et le tick dont la distance au tick testé est égale à une période d'émission du message courant. Le membre de droite représente la quantité totale de bits des messages qui occupent le tick précédemment sélectionné et le tick dont la distance au tick précédemment sélectionné est égale à une période d'émission du message courant. La proposition P1 est valide lorsque le membre de gauche est strictement supérieur au membre de droite. En d'autres termes, la proposition P1 est valide lorsqu'un placement du message dans le tick testé conduit à un nombre de bits supérieur au placement du message dans le tick précédemment sélectionné.

La proposition P2 est définie pour avoir les mêmes valeurs de vérité que :

$$T1(V3)+T1(V3+V9) = T1(V4)+T1(V4+V9)$$

Dans l'expression de la proposition P2, le membre de gauche représente la quantité totale de bits des messages qui occupent le tick testé et le tick dont la distance au tick testé est égale à une période d'émission du message courant de façon identique à la proposition P1. Le membre de droite représente la quantité totale de bits des messages qui occupent le tick précédemment sélectionné et le tick dont la distance au tick précédemment sélectionné est égale à une période d'émission du message courant de façon identique à la proposition P1. La proposition P2 est valide lorsque le membre de gauche est égal au membre de droite. En d'autres termes, la proposition P2 est valide lorsqu'un placement du message courant dans le tick testé conduit à un nombre de bits de même valeur que celui obtenu en plaçant le message courant dans le tick précédemment sélectionné.

La proposition P4 est définie pour avoir les mêmes valeurs de vérité que :

$$T2(V3)+T2(V3+V9) \bullet T2(V4)+T2(V4+V9)$$

Dans l'expression de la proposition P4, le membre de gauche représente la somme des identificateurs des messages qui occupent le tick testé et le tick dont la distance au tick testé est égale à une période d'émission du message courant. Le membre de droite représente la somme des identificateurs des messages qui occupent le tick précédemment sélectionné et le tick dont la distance au tick précédemment sélectionné est égale à une période d'émission du message courant. La proposition P4 est valide lorsque le membre de gauche est inférieur ou égal au membre de droite. En d'autres termes, la proposition P4 est valide lorsqu'un placement du message courant dans le tick testé conduit à une somme des identificateurs des messages inférieure ou égale à la somme des identificateurs des messages qui est obtenue en plaçant le message courant dans le tick précédemment sélectionné. En d'autres termes encore, la proposition P4 est valide lorsqu'un placement du message courant dans le tick testé, diminue la priorité des messages du tick testé par rapport au tick précédemment sélectionné.

La proposition P5 est définie pour avoir les mêmes valeurs de vérité que :

$$V2 \bullet (V9/V1)-1$$

La proposition P5 est valide lorsqu'en ajoutant 1 au compteur de boucle, on obtient une valeur inférieure ou égale au rapport de la période du message courant par la périodicité des ticks. En d'autres termes, la proposition P5 est valide tant que le contenu du compteur de boucle est inférieur ou égal à la quantité de ticks compris dans l'intervalle de temps qui sépare deux émissions successives du message courant, moins une unité. En d'autres termes encore, la proposition P5 est valide tant que les itérations de traitement par le procédé n'ont pas atteint le nombre qui correspond à la quantité de ticks contenus dans une période d'émission du message courant.

En résumé, la partie conditionnelle de la transition 12 est valide tant que le nombre d'itérations de traitement est inférieur à la période associée au message courant exprimée en nombre de ticks et lorsque le placement du message courant dans le tick testé conduit à un encombrement supérieur à celui obtenu en plaçant le message courant dans le tick précédemment sélectionné ou à encombrement égal, lorsque le placement du message courant dans le tick testé conduit à une priorité globale plus élevée que celle obtenue en plaçant le message courant dans le tick précédemment sélectionné.

Dans la partie action de la transition 12, le compteur de boucle est incrémenté de façon à indiquer une itération suivante du procédé. Si le nombre de ticks dans la période du message courant moins la valeur ordinale V3 de tick qui vient d'être testé est égale à l'unité, la valeur ordinale du tick à tester est ramenée à zéro. Sinon la valeur ordinale V3 de tick testée, est incrémentée de façon à tester le tick qui succède au tick qui vient d'être testé.

La transition 12 fait reboucler l'étape E1 sur elle-même de sorte que les ticks sont testés à la suite les uns des autres tant que l'étape E1 reboucle sur elle-même.

Une transition 13 est conditionnée par la formule propositionnelle suivante :

$$(P2 \land \neg P4 \land P5) \lor (P3 \land P5)$$

De manière connue dans les formules propositionnelles, le signe ¬ désigne une négation logique de la proposition qu'il précède. Les propositions P2, P4 et P5 ont été définies précédemment.

La proposition P3 est définie pour avoir les mêmes valeurs de vérité que :

$$T1(V3)+T1(V3+V9) < T1(V4)+T1(V4+V9)$$

Dans l'expression de la proposition P3, le membre de gauche représente la quantité totale de bits des messages qui occupent le tick testé et le tick dont la distance au tick testé est égale à une période d'émission du message courant. Le membre de droite représente la quantité totale de bits des messages qui occupent le tick précédemment sélectionné et le tick dont la distance au tick précédemment sélectionné est égale à une période d'émission du message courant. La proposition P3 est valide lorsque le membre de gauche est strictement inférieur au membre de droite. En d'autres termes, la proposition P3 est valide lorsqu'un placement du message dans le tick testé conduit à un nombre de bits inférieur au placement du message dans le tick précédemment sélectionné.

La partie conditionnelle de la transition 13 est valide tant que le nombre d'itérations de traitement est inférieur à la période associée au message courant exprimée en nombre de ticks et lorsque le placement du message courant dans le tick testé conduit à un encombrement inférieur à celui obtenu en plaçant le message courant dans le tick précédemment sélectionné ou à encombrement égal, lorsque le placement du message courant dans le tick testé ne conduit pas à une priorité globale plus élevée que celle obtenue en plaçant le message courant dans le tick précédemment sélectionné.

Dans la partie action de la transition 13, la variable entière V4 pour mémoriser la valeur ordinale de tick sélectionnée précédemment, est positionnée à la valeur ordinale V3 de tick testée. La valeur de décalage T3(V5) associé au message courant, est positionnée sur la valeur du produit de la valeur ordinale de tick testé par la périodicité du tick, simplement de façon à exprimer le décalage en ms plutôt qu'en nombre de ticks. Alternativement, le décalage peut aussi être exprimé en nombre de ticks. Le compteur de boucle est incrémenté de façon à indiquer une itération suivante du procédé. Si le nombre de ticks dans la période du message courant moins la valeur ordinale V3 de tick qui vient d'être testé est égale à l'unité, la valeur ordinale du tick à tester est ramenée à zéro. Sinon la valeur ordinale V3 de tick testée, est incrémentée de façon à pointer sur le tick suivant pour succéder au tick qui vient d'être testé.

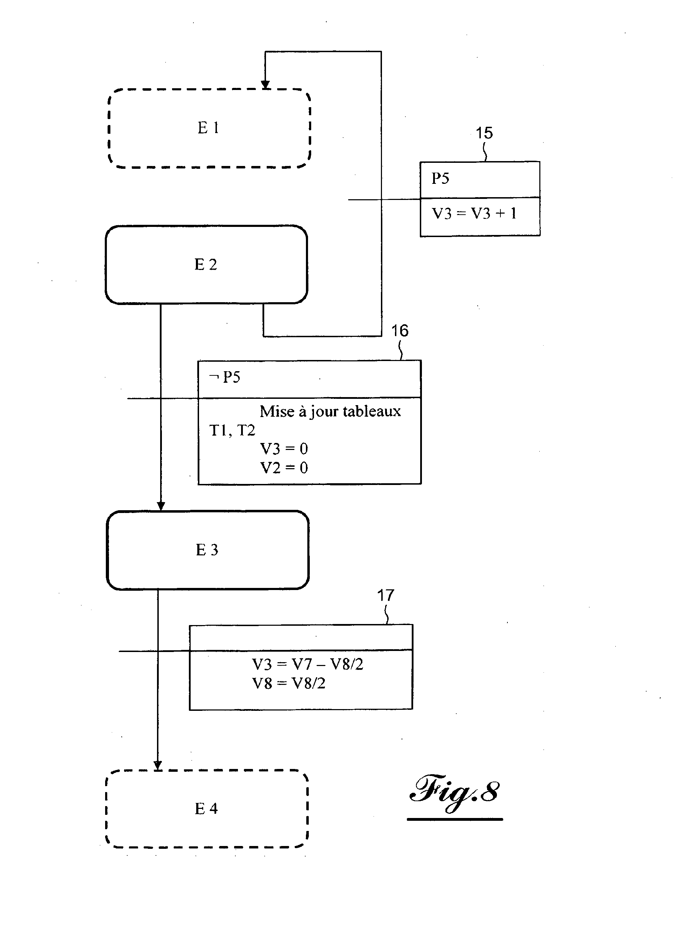

La transition 13 active à partir de l'étape E1, une étape E2 décrite plus loin en référence à la figure 8.

Une transition 14 est conditionnée par la formule propositionnelle suivante :

$$\neg P5$$

La partie conditionnelle de la transition 14 est valide dès que le contenu du compteur de boucle est supérieur à la quantité de ticks compris dans l'intervalle de temps qui sépare deux émissions successives du message courant, moins une unité. En d'autres termes, la partie conditionnelle de la transition 14 est valide dès que les itérations de traitement par le procédé ont atteint le nombre qui correspond à la quantité de ticks contenus dans une période d'émission du message courant.

La partie action de la transition 14 procède à une mise à jour des tableaux T1() et T2(). Plus précisément, le nombre de bits du message courant est ajouté à la valeur T1(V4) référencée dans le tableau par la valeur ordinale du tick sélectionné et la valeur de l'identificateur du message courant est ajoutée à la valeur T2(V4) référencée dans le tableau par la valeur ordinale du tick sélectionné. La variable V3 qui indique la valeur ordinale du tick testé est remise à zéro. La variable V2 pour compter les itérations de traitement au sein du procédé, est remise à zéro de façon à pouvoir compter ultérieurement des itérations au sein d'un autre bouclage sur les étapes E1 et E2.

La transition 14 active à partir de l'étape E1, une étape E3 décrite plus loin en référence à la figure 8.

En référence à la figure 8, on commence par décrire l'étape E2.

Une transition 15 est conditionnée par la formule propositionnelle unaire suivante :

$$P5$$

La partie conditionnelle de la transition 16 est valide tant que les itérations de traitement par le procédé n'ont pas atteint le nombre qui correspond à la quantité de ticks contenus dans une période d'émission du message courant.

La partie active de la transition 15 incrémente la variable V3 qui indique la valeur ordinale du tick testé.

La transition 15 réactive l'étape E1 à partir de l'étape E2. L'étape E1 est alors réactivée avec une valeur ordinale unitaire de tick testé si la variable V3 a été remise à zéro en entrant dans l'étape E2 et avec une valeur ordinale égale à l'ancienne valeur ordinale de tick testé augmentée d'une unité dans le cas contraire.

Une transition 16 est identique à la transition 14 pour activer l'étape E3 à partir de l'étape E2.

L'étape E3 consiste à trouver l'emplacement où il y a un maximum de ticks vides.

Une variable entière V6, nommée par exemple IndexDebutTickVide dans un programme d'ordinateur, est prévue pour mémoriser une position de premier tick à la suite duquel un nombre de ticks vides successifs est maximal.

Une variable entière V7, nommée par exemple IndexFinTickVide dans un programme d'ordinateur, est prévue pour mémoriser une position de dernier tick précédé par un nombre de ticks vides successifs qui est maximal.

Une variable entière V8, nommée par exemple NbTickVide dans un programme d'ordinateur, est prévue pour mémoriser un nombre de ticks vides successifs compris entre les valeurs de V6 et V7.

On explique à présent à titre purement illustratif et non limitatif, un mécanisme possible pour trouver la suite de ticks vides de longueur maximale. A l'activation de l'étape E3, les variables V6, V7 et V8 sont initialisées à zéro. L'homme du métier peut aisément mettre au point d'autres mécanismes sans sortir du cadre de la présente invention.

Un premier test consiste à vérifier si le tick indicé par la valeur de la variable V6 est vide.

Si tel n'est pas le cas, les variables V6 et V7 sont incrémentées et le premier test est réitéré tant que la variable V6 n'a pas atteint la valeur de la période d'émission qui est associée au message courant.

Si tel est le cas, la valeur de la variable V8 est positionnée à une valeur unitaire et la variable V7 est incrémentée de façon à exécuter un deuxième test.

Le deuxième test consiste à vérifier si le tick indicé par la valeur de la variable V7 est vide.

Si tel est le cas, les valeurs de la variable V8 et de la variable V7 sont incrémentées de façon à ré exécuter le deuxième test.

Si tel n'est pas le cas, les valeurs des variables V6 et V8 sont conservées et la variable V7 est incrémentée pour exécuter un troisième test.

Le troisième test consiste à vérifier si le tick indicé par la valeur de la variable V7 est vide.

Si tel n'est pas le cas, la variable V7 est incrémentée et le troisième test est réitéré.

Si tel est le cas, la valeur d'une variable V'8, de même type que la variable V8, est positionnée à une valeur unitaire et la variable V7 est incrémentée de façon à exécuter un quatrième test.

Le quatrième test consiste à vérifier si le tick indicé par la valeur de la variable V7 est vide.

Si tel est le cas, les valeurs de la variable V'8 et de la variable V7 sont incrémentées de façon à ré exécuter le quatrième test.

Si tel n'est pas le cas, les variables V8 et V'8 sont comparées. Si V8 est supérieure à V'8, les valeurs de V6 et V8 sont conservées. Sinon la valeur de V8 est positionnée à la valeur de V'8 et la valeur de V6 est positionnée à V7-V'8. La variable V7 est incrémentée pour ré exécuter le troisième test.

Les tests qui viennent d'être décrits ne sont plus exécutés dès que V7 a atteint V9 - 1. V7 est alors positionné à V7 = V6+V8 de sorte que la suite de ticks vides de longueur maximale est obtenue.

Une transition 17 a une partie conditionnelle vide et une partie action dans laquelle on se positionne par la variable V3 au milieu de la suite de ticks vides qui vient d'être obtenue :

$$V3 = V7 - V8/2$$

$$V8 = V8/2.$$

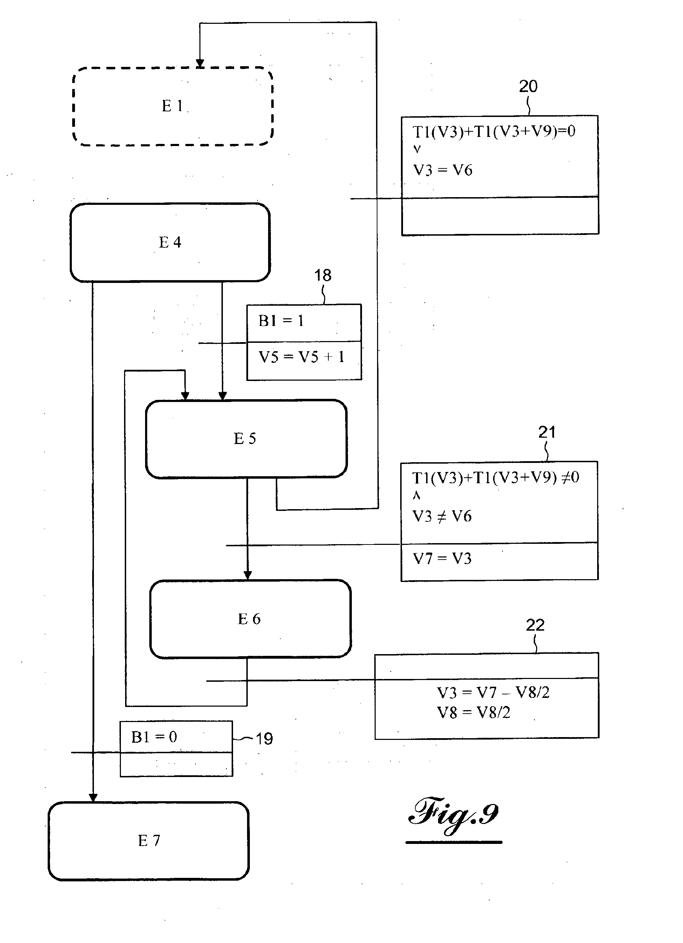

La transition 17 active à partir de l'étape E3, une étape E4 que l'on décrit maintenant en référence à la figure 9.

L'étape E4 est prévue pour vérifier s'il existe encore des messages à traiter au moyen d'une variable booléenne B1, nommée par exemple MessageAtraiter dans un programme d'ordinateur. Un état, par exemple à 1, indique qu'il reste des messages à traiter. Un autre état, par exemple à 0, indique qu'il ne reste plus de messages à traiter, c'est le cas notamment lorsque la fin du tableau de la figure 1 ou 2 est atteinte.

La partie conditionnelle d'une transition 18 est validée lorsque la variable booléenne B1 indique qu'il existe encore au moins un message à traiter. La partie action de la transition 18 pointe sur le message suivant en incrémentant la variable V5. A partir de l'étape E4, la transition 18 active une étape E5.

Dans l'étape E5, le message courant qui est considéré est le message pointé par V5 dont la période est donnée par la variable V9. L'étape E5 a pour objet de vérifier la présence d'un message dans le tick distant d'une période par rapport au tick indicé par la variable V3.

La partie conditionnelle d'une transition 20 est validée lorsque la somme des bits contenus dans le tick indicé par la variable V3 et dans le tick indicé par la somme des variables V3 et V9, est nulle, ou lorsque la variable V3 est égale à la variable V6, en d'autres termes, lorsque le tick testé est le tick de début de la suite de ticks vide de longueur maximale. La partie action de la transition 20 est vide.

A partir de l'étape E5, la transition 20 réactive l'étape E1.

La partie conditionnelle d'une transition 21 est validée lorsque la somme des bits contenus dans le tick indicé par la variable V3 et dans le tick indicé par la somme des variables V3 et V9, n'est pas nulle, et lorsque la variable V3 n'est pas égale à la variable V6, en d'autres termes, lorsque le tick testé n'est pas le tick de début de la suite de ticks vide de longueur maximale. La partie action de la transition 20 positionne la variable V7 qui indique la fin de la liste de ticks vides, à la valeur de la variable V3 qui indique le tick testé.

A partir de l'étape E5, la transition 21 active une étape E6 dans laquelle il existe un message dans le tick distant d'une période par rapport au tick testé.

Une transition 22 a une partie conditionnelle vide et une partie action dans laquelle on décale le tick testé d'une demi longueur de liste vide vers la gauche par rapport à sa position précédente en faisant V3= V7- V8/2. Dans la partie action, on divise aussi par 2 la longueur de la liste de ticks vides.

A partir de l'étape E6, la transition 22 réactive l'étape E5.

Une transition 19 est valide lorsqu'il n'existe plus de message à traiter. A partir de la quatrième étape E4, la transition 19 active une septième étape E7 qui marque la fin du procédé.

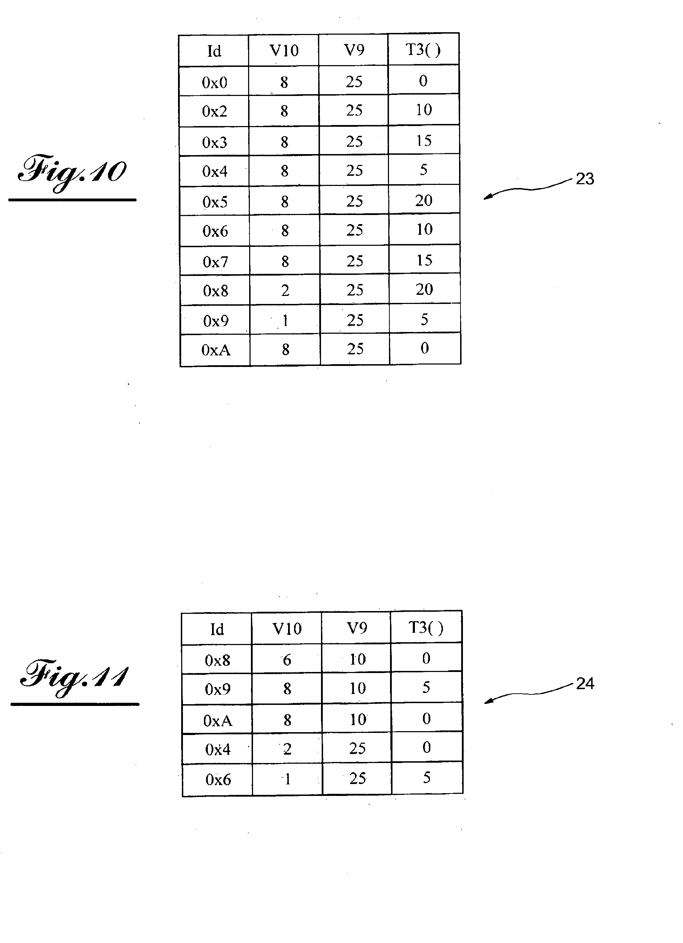

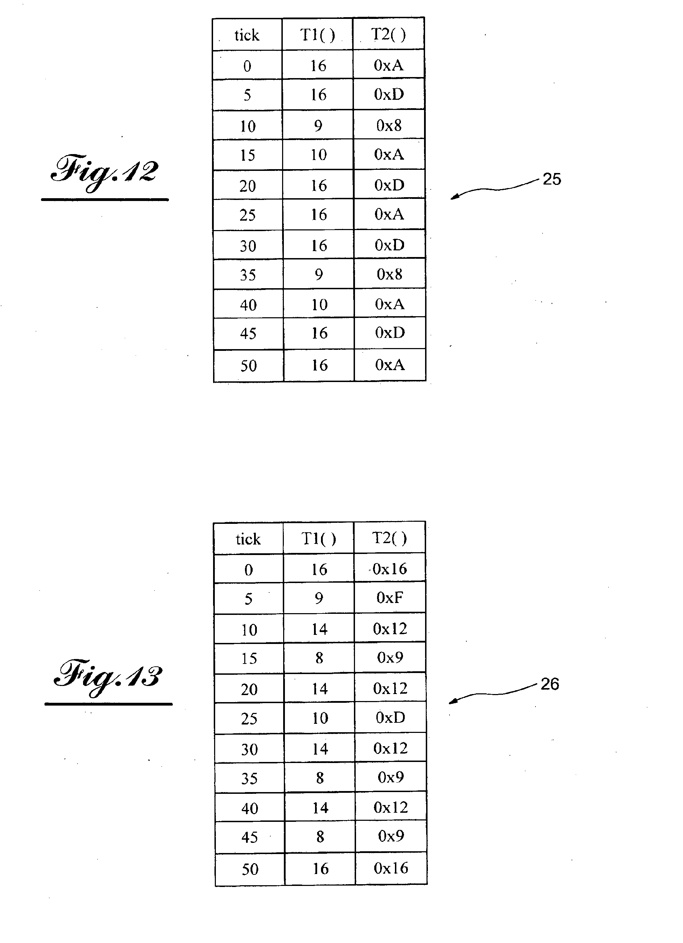

La figure 10 montre l'état de la table 23 lorsque le procédé arrive dans l'étape E7. La colonne de droite contient un décalage nul pour les messages identifiés 0x0 et 0xA dont la longueur pour chacun est de huit octets, soit soixante quatre bits. La table associative 25 représentée sur la figure 12, associe les tableaux T1() et T2() à chaque tick de 5 ms dans lequel est placé un message répertorié dans la table 23.

La période étant de 25 ms pour chaque message, on note dans le tableau T1(), une valeur de seize octets, soit cent vingt huit bits qui occupent les ticks de valeur ordinale 0 distant de 0ms, 5 distant de 25ms et 10 distant de 50ms.

La colonne de droite de la table 23 contient un décalage de deux ticks, soit 10 ms pour les messages identifiés 0x2 et 0x6.

La figure 11 montre l'état de la table 24 lorsque le procédé arrive dans l'étape E7. La colonne de droite contient un décalage nul pour les messages identifiés 0x0, 0xA et 0x4 dont la longueur est respectivement de six octets, huit octets et deux octets. La table associative 26 représentée sur la figure 13, associe les tableaux T1() et T2() à chaque tick de 5 ms dans lequel est placé un message répertorié dans la table 24.

La période étant de 10 ms pour les messages 0x8, 0xA et de 25 ms pour le message 0x4, on note dans le tableau T1() en figure 13, une valeur de seize octets, soit cent vingt huit bits qui occupent les ticks de valeur ordinale 0 distant de 0ms et 10 distant de 50ms. La colonne de droite de la table 24 contient un décalage de un tick, soit 5 ms pour les messages identifiés 0x9 et 0x6 de longueur respective huit octets et un octet. La période étant de 10 ms pour le message 0x9 et de 25 ms pour le message 0x6, on note dans le tableau T1() de la figure 13, un encombrement de neuf octets du tick de valeur ordinale 1 distant de 5 ms.

On retrouve le message 0x9 dans le tick de valeur ordinale 3 distant de 15 ms, dans le tick de valeur ordinale 5 distant de 25 ms, dans le tick de valeur ordinale 7 distant de 35 ms, et dans le tick de valeur ordinale 9 distant de 45 ms, dans lesquels le cumul de sa longueur conduit à un encombrement respectivement de huit, dix, huit et huit octets.

On retrouve le message 0x6 dans le tick de valeur ordinale 3 distant de 30 ms, dans lequel le cumul de sa longueur conduit à un encombrement de quatorze octets.

Jamais l'encombrement ne dépasse seize octets.

**Revendications**

1. Procédé pour émettre depuis un calculateur, des messages à chacun desquels est associée une période d'émission (V9),

   en répartissant les messages dans des fenêtres temporelles à périodicité (V1) prédéterminée de telle sorte que chaque période d'émission est un multiple entier de ladite périodicité,
   dans lequel les messages sont placés dans des fenêtres qui sont sélectionnées avec des décalages par rapport à une fenêtre initiale de façon à éviter ou à diminuer des collisions avec des messages émis par un autre calculateur ou avec des messages présents sur le réseau,
   et dans lequel, pour sélectionner chaque fenêtre, le procédé étant **caractérisé en ce qu'**il comprend :

   - une première étape (E1) à partir de laquelle pour un message courant sélectionné parmi lesdits messages, on teste des fenêtres temporelles successives en nombre inférieur d'une unité au multiple entier qui exprime la période d'émission associée au message courant, en calculant pour chaque fenêtre testée au moins la quantité de bits qui est contenue dans la fenêtre testée et dans une fenêtre qui succède à la fenêtre testée après une période d'émission lorsque le message courant est placé dans ladite fenêtre testée ; et
   - une deuxième étape (E2) dans laquelle la fenêtre sélectionnée pour placer le message, est celle pour laquelle au moins la quantité de bits calculée est minimale.

2. Procédé selon la revendication 1, **caractérisé en ce que** :

   - dans la première étape (E1), on calcule pour chaque fenêtre testée, une priorité moyenne des messages contenus dans la fenêtre testée et dans la fenêtre qui succède à la fenêtre testée après une période d'émission lorsque le message courant est placé dans ladite fenêtre testée ; et
   - dans la deuxième étape (E2), parmi deux fenêtres testées pour lesquelles la quantité de bits calculée est minimale, la fenêtre sélectionnée est celle pour laquelle la priorité moyenne est la plus faible.

3. Procédé selon la revendication 2, **caractérisé en ce que** dans la deuxième étape (E2), parmi deux fenêtres testées pour lesquelles la quantité de bits calculée est minimale et la priorité moyenne est de niveau identique, la fenêtre sélectionnée est celle précédemment testée.

4. Procédé selon l'une des revendications 1 à 3, **caractérisé en ce qu'**il comprend une étape initiale (E0) exécutée préalablement aux autres étapes et dans laquelle les messages à émettre sont classés par ordre de périodes d'émission croissantes et les messages auxquels sont associés des périodes d'émission identiques, sont classés par ordre de priorités décroissantes.

5. Procédé selon l'une des revendications 1 à 4, **caractérisé en ce que** le message courant sélectionné pour une première exécution de la première étape (E1), est le message auquel la période d'émission associée est la plus faible et parmi les messages de période d'émission la plus faible, le message de priorité la plus élevée.

6. Procédé selon l'une des revendications 1 à 5, **caractérisé en ce que** pour exécuter la première étape (E1) et la deuxième étape (E2), les messages à émettre sont sélectionnés par ordre de périodes d'émission croissantes et pour des périodes d'émission identiques, par ordre de priorités décroissantes.

7. Procédé selon la revendication 6, **caractérisé en ce qu'**il comprend une troisième étape (E3) qui est exécutée après avoir sélectionné la fenêtre temporelle qui convient pour le message courant, de façon à trouver une position (V6) de fenêtre temporelle qui débute une suite de longueur maximale de fenêtres temporelles vides successives.

8. Procédé selon la revendication 7, **caractérisé en ce que**, après exécution de la troisième étape (E3), la fenêtre testée est positionnée au milieu de ladite suite et la longueur de ladite suite est réduite de moitié.

9. Procédé selon la revendication 8, **caractérisé en ce qu'**il comprend :

   - une quatrième étape (E4) dans laquelle on observe s'il existe encore un message à traiter ; et
   - une cinquième étape (E5) exécutée s'il existe encore un message à traiter, en prenant le message observé comme nouveau message courant, de façon à ré exécuter la première étape (E1) pour le nouveau message courant lorsque la quantité de bits qui est contenue dans la fenêtre testée et dans la fenêtre qui succède à la fenêtre testée après une période d'émission, est nulle ou lorsqu'une valeur ordinale (V3) de la fenêtre testée est égale à la position (V6) de fenêtre temporelle qui débute une suite de longueur maximale de fenêtres temporelles vides successives.

**10.** Procédé selon la revendication 9, **caractérisé en ce qu'**il comprend une sixième étape (E6) exécutée après la cinquième étape (E5) lorsque la quantité de bits qui est contenue dans la fenêtre testée et dans la fenêtre qui succède à la fenêtre testée après une période d'émission, n'est pas nulle et lorsque la valeur ordinale (V3) de la fenêtre testée n'est pas égale à la position (V6) de fenêtre temporelle qui débute une suite de longueur maximale de fenêtres temporelles vides successives, de façon à ré exécuter la cinquième étape (E5) après avoir positionné la fenêtre testée au milieu de la suite réduite de longueur maximale de fenêtres temporelles vides successives et avoir réduit à nouveau de moitié ladite suite réduite.

**11.** Procédé selon l'une des revendications 1 à 10, **caractérisé en ce que** tant que la première étape (E1) ou la deuxième étape (E2) est exécutée, la valeur ordinale (V3) de la fenêtre testée est remise à zéro lorsque ladite valeur ordinale atteint ledit nombre inférieur d'une unité au multiple entier qui exprime la période d'émission associée au message courant.

**12.** Produit programme d'ordinateur chargeable directement dans la mémoire interne d'un calculateur numérique, comprenant des portions de code logiciel pour l'exécution des étapes de procédé selon l'une quelconque des revendications 1 à 10 lorsque ledit programme est exécuté sur un calculateur.

**13.** Calculateur agencé pour émettre des messages à chacun desquels est associée une période d'émission (V9), comprenant en mémoire :

- une première variable (V1) pour indiquer une périodicité de fenêtres temporelles prédéterminée de telle sorte que chaque période d'émission est exprimable par un multiple entier de ladite périodicité ;
- une table associative (23, 24) dans laquelle les messages sont associés chacun à un décalage de fenêtre par rapport à une fenêtre initiale de décalage nul de façon à éviter ou à diminuer des collisions avec des messages émis par un autre calculateur ou avec des messages présents sur le réseau, **caractérisé en ce que** l'émission desdits messages par le calculateur est déterminée avec le procédé selon l'une des revendications 1 à 11.

**14.** Calculateur selon la revendication 13, **caractérisé en ce que** les décalages associés aux messages conduisent à une répartition des messages dans les fenêtres temporelles qui génère une charge minimale d'occupation des fenêtres par les messages.

**15.** Calculateur selon la revendication 13 ou 14, **caractérisé en ce que** les messages sont classés dans la table associative (23, 24) par ordre de périodes d'émission croissantes et les messages auxquels est associée une même période d'émission, sont classés par ordre de priorités décroissantes.

**Patentansprüche**

**1.** Verfahren zum Senden von einem Rechner von Nachrichten, mit welchen jeweils eine Sendeperiode (V9) assoziiert ist,
indem die Nachrichten in Zeitfenstern mit vorbestimmter Periodizität (V1) derart verteilt werden, dass jede Sendeperiode ein ganzzahliges Vielfaches der Periodizität ist,
wobei die Nachrichten in Fenstern platziert werden, die mit Verschiebungen in Bezug auf ein anfängliches Fenster derart ausgewählt werden, dass Kollisionen mit Nachrichten, die von einem anderen Rechner gesendet werden, oder mit Nachrichten, die auf dem Netzwerk vorhanden sind, vermieden oder verringert werden, und bei dem zum Auswählen jedes Fensters das Verfahren **dadurch gekennzeichnet ist, dass** es Folgendes umfasst:

- einen ersten Schritt (E1), ab welchem für eine aktuelle Nachricht, die aus den Nachrichten ausgewählt ist, aufeinanderfolgende Zeitfenster in einer Anzahl kleiner um eine Einheit als das ganzzahlige Vielfache, das die Sendeperiode ausdrückt, die mit der aktuellen Nachricht assoziiert ist, getestet werden, indem für jedes getestete Fenster mindestens die Bitmenge berechnet wird, die in dem getesteten Fenster und in einem Fenster, das auf das getestete Fenster nach einer Sendeperiode folgt, wenn die aktuelle Nachricht in das getestete Fenster platziert wird, enthalten ist, und
- einen zweiten Schritt (E2), bei dem das zum Platzieren der Nachricht ausgewählte Fenster dasjenige ist, für das mindestens die berechnete Bitmenge minimal ist.

2. Verfahren nach Anspruch 1, **dadurch gekennzeichnet, dass**

- bei dem ersten Schritt (E1) für jedes getestete Fenster eine mittlere Priorität der Nachrichten berechnet wird, die in dem getesteten Fenster und dem Fenster, das auf das getestete Fenster nach einer Sendeperiode folgt, nachdem die aktuelle Nachricht in das getestete Fenster platziert wurde, enthalten sind, und
- bei dem zweiten Schritt (E2) aus den zwei getesteten Fenstern, für die die berechnete Bitmenge minimal ist, das ausgewählte Fenster dasjenige ist, für das die mittlere Priorität die niedrigste ist.

3. Verfahren nach Anspruch 2, **dadurch gekennzeichnet, dass** bei dem zweiten Schritt (E2) unter zwei getesteten Fenstern, für die die berechnete Bitmenge minimal ist und die mittlere Priorität identisches Niveau hat, das ausgewählte Fenster das zuvor getestete ist.

4. Verfahren nach einem der Ansprüche 1 bis 3, **dadurch gekennzeichnet, dass** es einen anfänglichen Schritt (E0) umfasst, der vor den anderen Schritten ausgeführt wird und bei dem die zu sendenden Nachrichten in der Reihenfolge zunehmender Sendeperioden eingestuft sind, und die Nachrichten, mit welchen identische Sendeperioden assoziiert sind, in der Reihenfolge sinkender Prioritäten eingestuft sind.

5. Verfahren nach einem der Ansprüche 1 bis 4, **dadurch gekennzeichnet, dass** die aktuelle Nachricht, die für eine erste Ausführung des ersten Schritts (E1) ausgewählt ist, die Nachricht ist, bei der die assoziierte Sendeperiode die niedrigste ist und unter den Nachrichten mit niedrigster Sendeperiode die Nachricht mit höchster Priorität ist.

6. Verfahren nach einem der Ansprüche 1 bis 5, **dadurch gekennzeichnet, dass** die zu sendenden Nachrichten zum Ausführen des ersten Schritts (E1) und des zweiten Schritts (E2) in der Reihenfolge zunehmender Sendeperioden und für identische Sendeperioden in der Reihenfolge abnehmender Prioritäten ausgewählt werden.

7. Verfahren nach Anspruch 6, **dadurch gekennzeichnet, dass** es einen dritten Schritt (E3) umfasst, der ausgeführt wird, nachdem das Zeitfenster ausgewählt wurde, das für die aktuelle Nachricht geeignet ist, so dass eine Position (V6) des Zeitfensters gefunden wird, die eine Folge mit maximaler Länge aufeinanderfolgender leerer Zeitfenster beginnt.

8. Verfahren nach Anspruch 7, **dadurch gekennzeichnet, dass** nach Ausführung des dritten Schritt (E3) das getestete Fenster in der Mitte der Folge positioniert wird und die Länge der Folge um die Hälfte verringert wird.

9. Verfahren nach Anspruch 8, **dadurch gekennzeichnet, dass** es Folgendes umfasst:

- einen vierten Schritt (E4), bei dem beobachtet wird, ob noch eine zu verarbeitende Nachricht existiert, und
- einen fünften Schritt (E5), der ausgeführt wird, falls noch eine zu verarbeitende Nachricht existiert, indem die beobachtete Nachricht als neue aktuelle Nachricht derart genommen wird, dass der erste Schritt (E1) erneut für die neue aktuelle Nachricht ausgeführt wird, wenn die Bitmenge, die in dem getesteten Fenster und in dem Fenster, das auf das getestete Fenster nach einer Sendeperiode enthalten ist, null ist, oder wenn ein Ordinalwert (V3) des getesteten Fensters gleich der Position (V6) des Zeitfensters ist, das eine Folge mit maximaler Länge aufeinanderfolgender leerer Zeitfenster beginnt.

10. Verfahren nach Anspruch 9, **dadurch gekennzeichnet, dass** es einen sechsten Schritt (E6) umfasst, der nach dem fünften Schritt (E5) ausgeführt wird, wenn die Bitmenge, die in dem getesteten Fenster und in dem auf das getestete Fenster nach einer Sendeperiode folgenden Fenster enthalten ist, nicht null ist, und wenn der Ordinalwert (V3) des getesteten Fensters nicht gleich der Position (V6) des Zeitfensters ist, das eine Folge aufeinanderfolgender leerer Zeitfenster mit maximaler Länge beginnt, so dass der fünfte Schritt (E5) erneut ausgeführt wird, nachdem das getestete Fenster in der Mitte der um die maximale Länge aufeinanderfolgender leerer Zeitfenster verringerten Folge positioniert und die verringerte Folge erneut um die Hälfte verringert wurde.

11. Verfahren nach einem der Ansprüche 1 bis 10, **dadurch gekennzeichnet, dass**, solange der erste Schritt (E1) oder der zweite Schritt (E2) ausgeführt wird, der Ordinalwert (V3) des getesteten Fensters auf null gestellt wird, wenn der Ordinalwert die Anzahl erreicht, die niedriger als eine Einheit des ganzzahligen Vielfachen, das die Sendeperiode ausdrückt, die mit der aktuellen Nachricht assoziiert ist, ist.

12. Computerprogrammprodukt, das direkt in den internen Speicher eines digitalen Rechners geladen wird, das Softwarecodeabschnitte für die Ausführung der Verfahrensschritte nach einem der Ansprüche 1 bis 10 umfasst, wenn das Programm auf einem Rechner ausgeführt wird.

13. Rechner, der eingerichtet ist, um Nachrichten zu senden, mit welchen jeweils eine Sendeperiode (V9) assoziiert ist, der Folgendes im Speicher enthält:

- eine erste Variable (V1) zum Angeben einer Periodizität von Zeitfenstern, die derart vorbestimmt ist, dass jede Sendeperiode durch ein ganzzahliges Vielfaches der Periodizität ausgedrückt werden kann,
- eine Assoziationstabelle (23, 24), in der die Nachrichten jeweils mit einer Fensterverschiebung in Bezug auf ein anfängliches Verschiebungsfenster gleich null derart assoziiert werden, dass Kollisionen mit Nachrichten, die von einem anderen Rechner gesendet werden, oder mit Nachrichten, die auf dem Netzwerk vorhanden sind, vermieden oder verringert werden, **dadurch gekennzeichnet, dass** das Senden der Nachrichten durch den Rechner mit dem Verfahren nach einem der Ansprüche 1 bis 11 bestimmt wird.

14. Rechner nach Anspruch 13, **dadurch gekennzeichnet, dass** die mit den Nachrichten assoziierten Verschiebungen zu einer Verteilung der Nachrichten in den Zeitfenstern führen, die eine minimale Belegungslast der Fenster durch die Nachrichten ergibt.

15. Rechner nach Anspruch 13 oder 14, **dadurch gekennzeichnet, dass** die Nachrichten in der Assoziationstabelle (23, 24) in der Reihenfolge zunehmender Sendeperioden eingestuft sind, und dass die Nachrichten, mit welchen ein und dieselbe Sendeperiode assoziiert ist, in der Reihenfolge sinkender Prioritäten eingestuft sind.

**Claims**

1. A method for transmitting messages from a computer, wherein a transmission period (V9) is associated with each message,
   by distributing the messages in time windows with predetermined periodicity (V1) such that each transmission period is an integral multiple of said periodicity,
   in which the messages are placed in windows which are selected with time lags relative to an initial window so as to avoid or reduce collisions with messages transmitted by another computer or with messages on the network,
   and in which, for selecting each window, the method being **characterized in that** it includes:

   - a first step (E1) from which for a current message selected from said messages, successive time windows are tested in number less by one unit than the integral multiple which expresses the transmission period associated with the current message, by calculating for each tested window at least the quantity of bits which is contained in the tested window and in a window which succeeds the tested window after a transmission period when the current message is placed in said tested window; and
   - a second step (E2) in which the selected window for placing the message is that for which at least the quantity of bits calculated is minimal.

2. The method according to claim 1, **characterized in that**:

   - in the first step (E1), for each tested window, a mean priority is calculated of the messages contained in the tested window and in the window which succeeds the tested window after a transmission period when the current message is placed in said tested window; and
   - in the second step (E2), from two tested windows for which the quantity of bits calculated is minimal, the selected window is that for which the mean priority is the lowest.

3. The method according to claim 2, **characterized in that** in the second step (E2), from two tested windows for which the quantity of bits calculated is minimal and the mean priority is of identical level, the selected window is that previously tested.

4. The method according to one of claims 1 to 3, **characterized in that** it includes an initial step (E0) executed prior to the other steps and in which the messages to be transmitted are classified by order of increasing transmission periods and the messages to which identical transmission periods are associated are classified by order of decreasing priorities.

5. The method according to one of claims 1 to 4, **characterized in that** the current message selected for a first execution of the first step (E1) is the message to which the associated transmission period is the lowest and from the messages of lowest emission period, the message of highest priority.

6. The method according to one of claims 1 to 5, **characterized in that** to execute the first step (E1) and the second step (E2), the messages to be transmitted are selected by order of increasing transmission periods and for identical transmission periods, by order of decreasing priorities.

7. The method according to claim 6, **characterized in that** it includes a third step (E3) which is executed after having selected the time window which is suitable for the current message, so as to find a time window position (V6) which starts a series of maximum length of successive empty time windows.

8. The method according to claim 7, **characterized in that**, after execution of the third step (E3), the tested window is positioned in the middle of said series and the length of said series is reduced by half.

9. The method according to claim 8, **characterized in that** it includes:

   - a fourth step (E4) in which an observation is made as to whether a further message to be processed exists; and
   - a fifth step (E5), executed if a further message to be processed exists, taking the observed message as new current message, so as to re-execute the first step (E1) for the new current message when the quantity of bits which is contained in the tested window and in the window which succeeds the tested window after a transmission period is zero or when an ordinal value (V3) of the tested window is equal to the time window position (V6) which starts a series of maximum length of successive empty time windows.

10. The method according to claim 9, **characterized in that** it includes a sixth step (E6) executed after the fifth step (E5) when the quantity of bits which is contained in the tested window and in the window which succeeds the tested window after a transmission period is not zero and when the ordinal value (V3) of the tested window is not equal to the time window position (V6) which starts a series of maximum length of successive empty time windows, so as to re-execute the fifth step (E5) after having positioned the tested window in the middle of the reduced series of maximum length of successive empty time windows and having again reduced by half said reduced series.

11. The method according to one of claims 1 to 10, **characterized in that** while the first step (E1) or the second step (E2) is executed, the ordinal value (V3) of the tested window is reset to zero when said ordinal value reaches said number less by one unit than the integral multiple which expresses the transmission period associated with the current message.

12. A computer program product able to be loaded directly in the internal memory of a digital computer, including portions of software code for the execution of the method steps according to any one of claims 1 to 10 when said program is executed on a computer.

13. A computer arranged to transmit messages, to each of which there is associated a transmission period (V9), including, stored:

   - a first variable (V1) for indicating a predetermined periodicity of time windows such that each transmission period can be expressed by an integral multiple of said periodicity:
   - an associative table (23, 24) in which the messages are each associated with a window time lag relative to an initial window of zero time lag so as to avoid or reduce collisions with messages transmitted by another computer or with messages on the network, **characterized in that** the transmission of said messages by the computer is determined with the method according to one of claims 1 to 11.

14. The computer according to claim 13, **characterized in that** the time lags associated with the messages lead to a distribution of the messages in the time windows which generates a minimal occupation load of the windows by the messages.

15. The computer according to claim 13 or 14, **characterized in that** the messages are classified in the associative table (23, 24) by order of increasing transmission periods and the messages to which a same emission period is associated are classified by order of decreasing priorities.

*Fig.1*

| Id | V10 | V9 | T3( ) |
|---|---|---|---|
| 0xA | 8 | 25 | |
| 0x9 | 8 | 25 | |
| 0x8 | 8 | 25 | |
| 0x7 | 8 | 25 | |
| 0x6 | 8 | 25 | |
| 0x5 | 8 | 25 | |
| 0x4 | 8 | 25 | |
| 0x3 | 2 | 25 | |
| 0x2 | 1 | 25 | |
| 0x0 | 8 | 25 | |

23

*Fig.2*

| Id | V10 | V9 | T3( ) |
|---|---|---|---|
| 0xA | 8 | 10 | |
| 0x9 | 8 | 10 | |
| 0x8 | 6 | 10 | |
| 0x4 | 2 | 25 | |
| 0x6 | 1 | 25 | |

24

*Fig.3*

T1(.) = 0
T2(.) = 0
V2 = 0
V1 = 5
V5 = 0

E 0

V3 = 0
V4 = 0
T3(V5) = V3*V1

E 1

*Fig.4*

*Fig.5*

| Id | V10 | V9 | T3( ) |
|---|---|---|---|
| 0x4 | 2 | 25 | |
| 0x6 | 1 | 25 | |
| 0x8 | 6 | 10 | |
| 0x9 | 8 | 10 | |
| 0xA | 8 | 10 | |

24

*Fig.6*

| Id | V10 | V9 | T3( ) |
|---|---|---|---|
| 0x8 | 6 | 10 | 0 |
| 0x9 | 8 | 10 | |
| 0xA | 8 | 10 | |
| 0x4 | 2 | 25 | |
| 0x6 | 1 | 25 | |

24

**12**

$((P1)^{\vee} (P2^{\wedge} P4))^{\wedge} P5$

$V3 = V3 + 1$
$V2 = V2 + 1$
If $V3 = (V9/V1) - 1$ Then
$V3 = 0$
Else
$V3 = V3 + 1$

**13**

$(P2^{\wedge} \neg P4^{\wedge} P5)^{\vee} (P3^{\wedge} P5)$

$V4 = V3 \; ; \; T3(V5) = V3 * V1$
$V2 = V2 + 1$
If $V3 = (V9/V1) - 1$ Then
$V3 = 0$
Else
$V3 = V3 + 1$

E 1

E 2

$\neg P5$ **14**

Mise à jour tableaux
T1, T2
$V3 = 0$
$V2 = 0$

E 3

*Fig. 7*

E 1

15

| P5 |
|---|
| V3 = V3 + 1 |

E 2

16

| ¬ P5 |
|---|
| Mise à jour tableaux T1, T2 |
| V3 = 0 |
| V2 = 0 |

E 3

17

| V3 = V7 − V8/2 |
|---|
| V8 = V8/2 |

E 4

*Fig.8*

*Fig.9*

**Fig.10**

| Id | V10 | V9 | T3( ) |
| --- | --- | --- | --- |
| 0x0 | 8 | 25 | 0 |
| 0x2 | 8 | 25 | 10 |
| 0x3 | 8 | 25 | 15 |
| 0x4 | 8 | 25 | 5 |
| 0x5 | 8 | 25 | 20 |
| 0x6 | 8 | 25 | 10 |
| 0x7 | 8 | 25 | 15 |
| 0x8 | 2 | 25 | 20 |
| 0x9 | 1 | 25 | 5 |
| 0xA | 8 | 25 | 0 |

23

**Fig.11**

| Id | V10 | V9 | T3( ) |
| --- | --- | --- | --- |
| 0x8 | 6 | 10 | 0 |
| 0x9 | 8 | 10 | 5 |
| 0xA | 8 | 10 | 0 |
| 0x4 | 2 | 25 | 0 |
| 0x6 | 1 | 25 | 5 |

24

*Fig.12*

| tick | T1( ) | T2( ) |
|------|-------|-------|
| 0 | 16 | 0xA |
| 5 | 16 | 0xD |
| 10 | 9 | 0x8 |
| 15 | 10 | 0xA |
| 20 | 16 | 0xD |
| 25 | 16 | 0xA |
| 30 | 16 | 0xD |
| 35 | 9 | 0x8 |
| 40 | 10 | 0xA |
| 45 | 16 | 0xD |
| 50 | 16 | 0xA |

25

*Fig.13*

| tick | T1( ) | T2( ) |
|------|-------|-------|
| 0 | 16 | 0x16 |
| 5 | 9 | 0xF |
| 10 | 14 | 0x12 |
| 15 | 8 | 0x9 |
| 20 | 14 | 0x12 |
| 25 | 10 | 0xD |
| 30 | 14 | 0x12 |
| 35 | 8 | 0x9 |
| 40 | 14 | 0x12 |
| 45 | 8 | 0x9 |
| 50 | 16 | 0x16 |

26

**EP 2 425 589 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1461910 B1

- US 4855966 A

**Littérature non-brevet citée dans la description**

- W, A number theoretic approach to time division multiplexing. **D DOUSKALIS.** IEEE Transactions on Communications. IEEE SERVICE CENTER, 01 Septembre 1990, vol. 38, 1504-1510